Europäisches Patentamt

European Patent Office

Office européen des brevets

(11) Veröffentlichungsnummer: **0 357 823**

**A1**

# (12) EUROPÄISCHE PATENTANMELDUNG

(21) Anmeldenummer: 88114674.0

(22) Anmeldetag: 08.09.88

(51) Int. Cl.⁵ **G01N 27/84 , G01N 27/85**

(43) Veröffentlichungstag der Anmeldung:
**14.03.90** Patentblatt **90/11**

(84) Benannte Vertragsstaaten:
**BE DE ES FR GB IT NL SE**

(71) Anmelder: **Magfoil & Inspektionstechniken GmbH**
**Grootkoppel 29**
**D-2400 Lübeck(DE)**

(72) Erfinder: **Walther, Karl G.**
**Theodor-Heuss-Strasse 35**
**D-5840 Schwerte(DE)**
Erfinder: **Walther, Ronald G.**
**Rütscher Strasse 175, Zi. 201**
**D-5100 Aachen(DE)**
Erfinder: **Leonard, Detlef**
**Holweg 12**
**D-2406 Stockelsdorf(DE)**

(74) Vertreter: **von Hellfeld, Axel, Dipl.-Phys. Dr. et al**
**Patentanwälte Wuesthoff- v. Pechmann-Behrens-Goetz Schweigerstrasse 2**
**D-8000 München 90(DE)**

(54) **Vorrichtung zum Prüfen von metallischen Werkstücken.**

(57) Eine Vorrichtung zum Prüfen von metallischen Werkstücken 20, insbesondere Schweißnähten unter Wasser, auf Fehlstellen weist einen Behälter 60 auf, der eine Flüssigkeit mit magnetisierbaren Teilchen enthält. In einem Magnetfeld ordnen sich die magnetisierbaren Teilchen zu für Fehlstellen charakteristischen Strukturen. Die Strukturen werden optisch auf einen Lichtleiter(54) abgebildet und entfernt vom Meßort verarbeitet und/oder direkt betrachtet.

Fig. 6

## Vorrichtung zum Prüfen von metallischen Werkstücken

Die Erfindung betrifft eine Vorrichtung zum Prüfen von metallischen Werkstücken, insbesondere Schweißnähten, auf Fehlstellen wie Risse, mit
- einem Behälter, der eine Flüssigkeit mit magnetisierbaren Teilchen enthält, und
- einer Einrichtung zum Erzeugen eines Magnetfeldes, welches zumindest teilweise das Werkstück durchsetzt, so daß an möglichen Fehlstellen ein magnetisches Streufeld entsteht, welches die Flüssigkeit in dem Behälter durchsetzt und in dem sich die magnetisierbaren Teilchen in einer für die Fehlstelle charakteristischen Struktur anordnen.

Eine solche Vorrichtung ist beispielsweise aus der DE-PS 31 45 090 bekannt.

Weiterbildungen einer solchen Prüfvorrichtung sind den europäischen Patentanmeldungen 88 110 714.8 und 88 110 713.0 zu entnehmen. Dieser Stand der Technik wird nachfolgend als bekannt vorausgesetzt. Zusätzlich wird noch auf die DE 37 31 709 und DE 38 13 680 verwiesen.

Das hier verwendete Magnet-Streufluß-Verfahren dient der Untersuchung von Bauwerken aus Stahl, insbesondere auch unter Wasser, wie Förderplattformen, Pipelines oder dergleichen. Das Verfahren wird bisweilen auch "Magnetpulver-Prüfverfahren" genannt. Mit ihm können Fehler in Werkstücken erkannt, lokalisiert und dokumentiert werden. Der Begriff "Werkstück" ist hier sehr allgemein zu verstehen und betrifft beliebige stählerne Bauwerke, insbesondere unter der Wasseroberfläche. Für die Prüfung solcher Werkstücke ist die internationale Vorschrift ISO 9000 maßgeblich.

Der Erfindung liegt die Aufgabe zugrunde, eine Vorrichtung zum Prüfen von metallischen Werkstücken der eingangs genannten Art derart weiterzubilden, daß mit einfachen Mitteln sehr schnell und zuverlässig eine Fehlstelle feststellbar ist.

Erfindungsgemäß wird diese Aufgabe bei einer Vorrichtung der eingangs genannten Art dadurch gelöst,
- daß die magnetisierbaren Teilchen optisch reflektierend oder leuchtend ausgebildet sind, und
- daß eine Lichtquelle zum Beleuchten der Teilchen vorgesehen ist, sowie
- eine Einrichtung zum Betrachten der charakteristischen Struktur der Teilchen.

Erfindungsgemäß kann also eine Struktur aus entsprechend einer Fehlstelle charakteristisch angeordneten Teilchen in einfacher Weise schnell erkannt werden. Dies gilt insbesondere unter schwierigen Bedingungen in tiefen Gewässern. Der hier verwendete Begriff "magnetisierbare Teilchen" ist so zu verstehen, daß alle Teilchen gemeint sind, die in einem Magnetfeld eine ausrichtende Kraft erfahren, also z.B. Eisenfeilspäne oder dergleichen.

Wenn, wie erfindungsgemäß vorgesehen, die magnetisierbaren Teilchen optisch reflektierend oder leuchtend ausgebildet sind, so kann die von ihnen erzeugte, für die Fehlstelle charakteristische Struktur in einfacher Weise mittels eines optischen Lichtleiters an einen vom Werkstück entfernten Ort übertragen werden, wo sie beispielsweise auf einem Bildschirm betrachtet werden kann. Der Taucher braucht vor Ort keine Beurteilung des Fehlstellen-Bildes vorzunehmen, sondern kann über das Bild vom entfernten Betrachter unterrichtet werden.

In einer bevorzugten Ausgestaltung der erfindungsgemäßen Vorrichtung ist vorgesehen, daß der Behälter mehrere zeilenweise angeordnete Kammern aufweist, durch welche die Flüssigkeit strömt. Dieses Verfahren ist auch für sich, d.h. ohne eine optisch aktive Ausgestaltung der Teilchen, anwendbar.

Dabei ist die Strömung der Teilchen so schwach, daß die im Magnetfeld an Fehlstellen gebildete charakteristische Struktur nicht gestört wird, oder die Strömung wird für die Zeit der Messung unterbrochen.

In einer weiteren bevorzugten Ausgestaltung der erfindungsgemäßen Vorrichtung ist die Einrichtung zum Erzeugen eines Magnetfeldes so ausgelegt, daß ein magnetisches Wechselfeld mit einer Frequenz erzeugt wird, die an die Erfordernisse der Messung anpaßbar ist. Die Eindringtiefe eines Magnetfeldes hängt von der Frequenz des magnetischen Wechselfeldes ab und wird durch den sogenannten Skin-Effekt bestimmt. Ist die Prüfung des Werkstückes besonders auf dessen Oberfläche gerichtet, werden also insbesondere Oberflächen-Risse gesucht, so ist eine hohe Frequenz des magnetischen Wechselfeldes vorteilhaft, da dann das Magnetfeld in der oberflächennahen Zone des Werkstückes konzentriert ist. Hierzu wird für die Kerne der das Magnetfeld erzeugenden Einrichtung ein Material gewählt, welches die Entstehung von Wirbelströmen weitgehend ausschließt. Das hier beschriebene Meßverfahren unter Verwendung hoher Frequenzen des magnetischen Wechselfeldes ist nicht nur bei einer gattungsgemäßen Vorrichtung verwendbar, sondern ganz allgemein bei jedem Magnet-Streufluß-Verfahren.

In einer weiteren bevorzugten Ausgestaltung der erfindungsgemäßen Vorrichtung ist vorgesehen, daß die Einrichtung zum Erzeugen eines Magnetfeldes flexibel ausgebildet ist, so daß die Stellung ihrer Pole an die Gestalt des Werkstückes anpaßbar ist. Hierdurch ist eine bessere Einkoppelung des Magnetfeldes in das Werkstück möglich, so daß genauere und deutlichere Meß ergebnisse erzielt werden können. Auch diese Ausgestaltung der Erfindung ist allgemein bei Magnet-Streufluß-Messungen verwendbar, d.h. auch ohne eine optische Ausgestaltung der Teilchen.

Eine weitere Variante der erfindungsgemäßen Vorrichtung sieht eine Meßeinrichtung vor, mit der das bei einer Prüfung des Werkstückes herrschende Magnetfeld direkt oder indirekt gemessen wird. Hiermit kann dann die Stärke des tatsächlich am Prüfort herrschenden Magnetfeldes auf einen Sollwert geregelt (normiert) werden, so daß jede Messung unter normierten Bedingungen stattfindet und einzelne Meßergebnisse zuverlässig miteinander verglichen werden können. Auch diese Variante der Erfindung ist für sich bei jedem Magnet-Streufluß-Verfahren einsetzbar.

Weitere vorteilhafte Einzelheiten der Erfindung ergeben sich aus der nachfolgenden Beschreibung von Ausführungsbeispielen anhand der Zeichnung. Es zeigt:

Fig. 1 eine Einrichtung zum Erzeugen eines Magnetfeldes;

Fig. 2 die Einrichtung gemäß Fig. 1 einschließlich eines zu prüfenden Werkstückes;

Fig. 3 eine elektrische Stromversorgung für die Magnetfeld-Erzeugungseinrichtung gemäß den Fig. 1 und 2 einschließlich eines Meßgerätes;

Fig. 4 eine Weiterbildung des Gegenstandes der Fig. 3;

Fig. 5 ein weiteres Ausführungsbeispiel einer Vorrichtung zum Prüfen von metallischen Werkstücken;

Fig. 6 Einzelheiten der Vorrichtung gemäß Fig. 5;

Fig. 7 schematisch einen Behälter für Flüssigkeit mit magnetisierbaren Teilchen; und

Fig. 8 Einzelheiten der Vorrichtung gemäß den Fig. 5 bis 7.

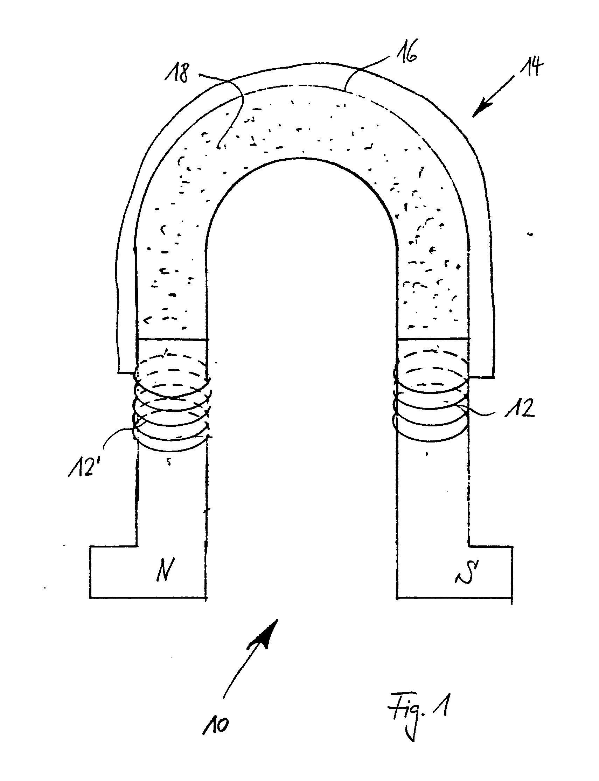

Fig. 1 zeigt eine Vorrichtung zum Erzeugen eines Magnetfeldes mit einem Magneten 10, der in bekannter Weise mit zwei Spulen 12, 12′ versehen ist. Die beiden Pole N und S des Magneten 10 sind über ein flexibles Zwischenstück 14 miteinander verbunden, so daß die relative Lage der Pole N und S zueinander willkürlich einstellbar ist. Das flexible Zwischenstück 10 weist einen Schlauch 16 auf, der mit einer Füllung 18 so ausgefüllt ist, daß zum einen eine hinreichende Flexibilität des Zwischenstückes 14 gewährleistet ist und zum anderen eine gute magnetische Koppelung der Pole N und S des Magneten 10. Die Füllung 18 des Schlauches 16 besteht aus körnigem, magnetisch hochpermeablem Material, das eine magnetisch sehr gut leitende Verbindung zwischen den Polen N und S herstellt. Als Material besonders geeignet sind in Kunstharz eingeölte Elementarmagnete. Die Kunstharz-Umhüllung der einzelnen Magnetkerne schützt diese gegen Reibung und Stoß beim Verbiegen des Schlauches 16.

Das Material der die Pole N und S des Magneten 10 bildenden Kerne ist so gewählt, daß hochfrequente magnetische Wechselfelder bis zu 2000 Hz mit den Spulen 12, 12′ erzeugt werden können.

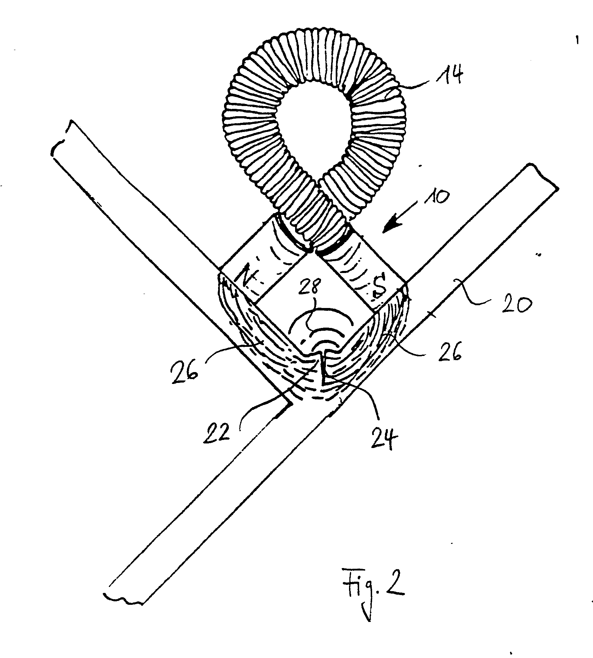

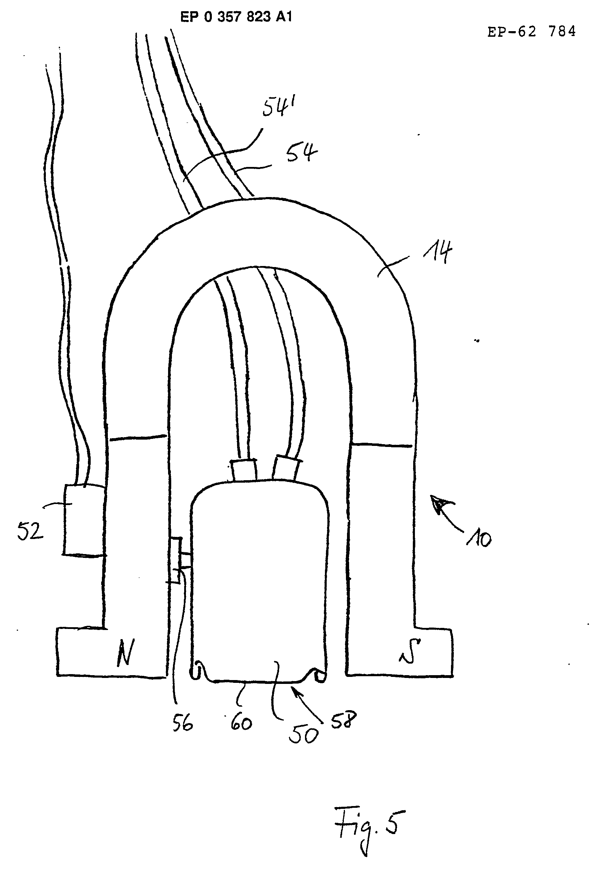

Fig. 2 zeigt den Magneten 10 gemäß Fig. 1 im Einsatz zur Überprüfung eines Werkstückes 20. Es soll eine Schweißnaht 22 des Werkstückes 20 überprüft werden, die eine Fehlstelle 24 aufweist, hier einen feinen Riß. Wie in Fig. 2 dargestellt ist, können die beiden Pole N und S des Magneten 10 mit Hilfe des flexiblen Zwischenstückes 14 so positioniert werden, daß sie ganzflächig satt auf Oberflächen des Werkstückes 20 aufliegen und so eine maximale Einkoppelung des Magnetfeldes 26 in das Werkstück 20 gegeben ist. Es werden also keine Störfelder zwischen dem Magneten 10 und dem Werkstück 20 erzeugt. Die Spulen und sonstigen elektrischen Versorgungsteile zum Erzeugen des Magnetfeldes sind in Fig. 2 weggelassen. An der Fehlstelle 24 entsteht ein magnetisches Streufeld 28, welches mit einer in den eingangs genannten Patentanmeldungen, insbesondere der DE-PS 31 45 090 beschriebenen Einrichtung oder einer weiter unten anhand der Fig. 5 bis 8 beschriebenen Einrichtung eine Vermessung der Fehlstelle 24 ermöglicht. Hierzu wird gemäß dem Stand der Technik ein Behälter mit magnetisierbaren Teilchen auf die Schweißnaht 22 gelegt und in bekannter Weise die Messung mit Hilfe des Magneten 10 durchgeführt. In Fig. 2 ist der Behälter mit den suspendierten magnetisierbaren Teilchen nicht dargestellt.

Wird ein magnetisches Wechselfeld mit hohen Frequenzen erzeugt, so konzentriert sich das Magnetfeld aufgrund des Skin-Effektes nahe der Oberfläche des Werkstückes 20, also im Bereich eines Risses 24. Hochfrequente Wechselfelder sind deshalb besonders für die Messung geeignet. Je nach dem verwendeten Material und der gewünschten Eindringtiefe des Magnetfeldes 26 werden Frequenzen von 10 bis 2000 Hz eingesetzt.

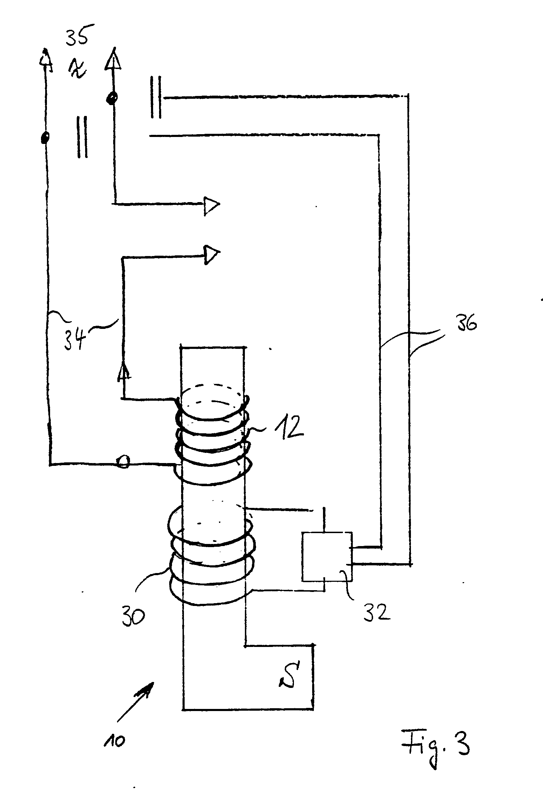

Fig. 3 zeigt schematisch eine Versorgungsschaltung zur Speisung der Spulen 12, 12′ (in Fig. 3 sind nur eine Spule 12 und der zugehörige Pol S gezeigt).

Gemäß Fig. 3 ist auf einem Kern des Magneten 10 neben der das Magnetfeld erzeugenden Spule 12 noch eine weitere Spule 30 als Sekundärspule angeordnet. Die Spule 30 dient der Messung der Stärke des mit dem Magneten 10 erzeugten Magnetfeldes 26. Hierzu wird in der Spule 30 eine Spannung elektromagnetisch induziert, die abhängig ist von den einzelnen Parametern zur Erzeugung des Magnetfeldes 26, insbesondere vom Strom durch die Spule 12 und der magnetischen Koppelung zwischen den Polen N und S des Magneten 10 und dem Werkstück 20. Der Strom durch die Spule 12 hängt insbesondere von der Länge der Verbindungsleitung zwischend er Stromversorgung und dem Magneten 10 ab. Insbesondere bei Arbeiten unter Wasser sind unterschiedliche Längen der Verbindungsleitung von 2 bis 600 m möglich. Die in der Spule 30 induzierte Spannung wird mittels eines Meßgerätes 32 abgegriffen und über Leitungen 36 einer elektronischen Auswerte Erschaltung zugeführt. Die in der Spule 30 induzierte Spannung wird in eine Frequenz gewandelt und auf die Zuleitung galvanisch aufgekoppelt. Die auf diese Weise modulierte Frequenz in der Verbindungsleitung 36 steht der Strom-Versorgungsschaltung 35 zur Speisung der Spule 12 zur Verfügung und kann dort zum einen dokumentiert werden, so daß die Stärke des herrschenden Magnetfeldes 26 dem gewonnen Meßergebnis zugeordnet werden kann und zum anderen auch zur Regelung des Magnetfeldes 26 selbst herangezogen werden, da die in der Spule 30 induzierte Spannung ein Maß für die Stärke des Magnetfeldes 26 ist. Dabei ist zu berücksichtigen, daß der durch die Spule 12 (und entsprechend die Spule 12′) fließende Strom von der Ankoppelung des Magneten 10 an das Werkstück 20 abhängt. Mit schlechter werdender Ankoppelung des Magneten 10 an das Werkstück 20 (d.h. mit größerem magnetischen Widerstand zwischen den Polen N und S und dem Material des Werkstückes 20) wird der Strom durch die Spule 12 größer. Auf diese Weise sind sowohl Aussagen über den Koppelungszustand zwischen Magnet 10 und Werkstück 20, als auch Aussagen über das herrschende Magnetfeld 26 möglich. Mit einer gegebenen Vorrichtung erfolgt die Eichung experimentell.

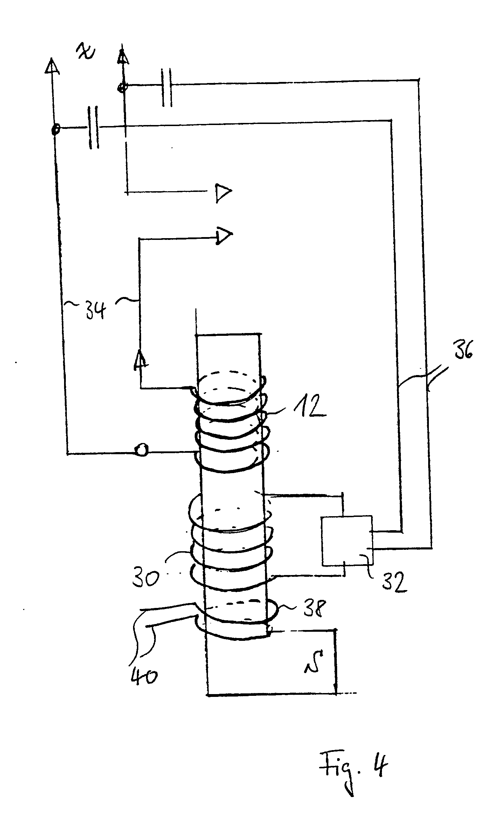

Fig. 4 zeigt eine Weiterbildung der Vorrichtung gemäß Fig. 3, wobei ergänzend noch eine dritte Spule 38 vorgesehen ist. In der Spule 38 wird bei Erzeugen eines magnetischen Wechselfeldes mit Wechselströmen in der Spule 12 ebenfalls (wie in der Spule 30) eine Spannung induziert, die über Zuleitungen 40 abgegriffen wird. Die in der Spule 38 erzeugte Spannung heizt einen mit den Leitungen 40 verbundenen Widerstandsdraht, der dazu verwendet wird, eine der getrennten Kammern gemäß der DE-PS 31 45 090 aufzuschmelzen, d.h. das Wandmaterial der Kammern ist aus einem Material, das bei erhöhten Temperaturen schmilzt und der Widerstandsdraht liegt direkt an der Kammer-Wand an. Sobald in der Spule 38 eine Spannung induziert wird, und über die Leitungen 40 ein Strom durch den Widerstandsdraht fließt, schmilzt die Kammer-Wand und es erfolgt die Vermischung der unterschiedlichen Flüssigkeiten gemäß der DE-PS 31 45 090.

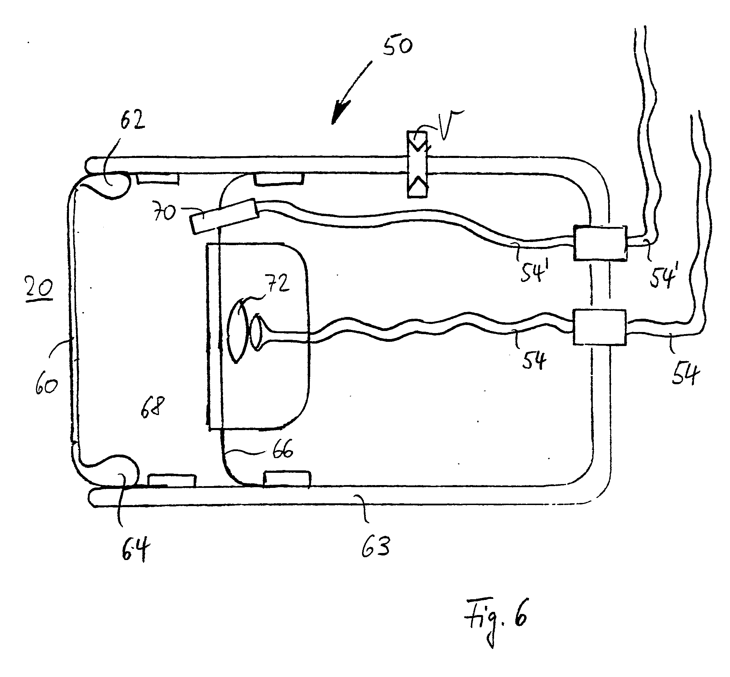

Die Fig. 5 bis 8 zeigen eine Vorrichtung, die im Vergleich mit dem Stand der Technik eine sehr schnelle Prüfung von metallischen Werkstücken ermöglicht. Hierzu ist zwischen den Polen N und S eine Prüfeinrichtung 50 angeordnet, die anhand der Fig. 6 bis 8 noch näher beschrieben wird. Die Prüfeinrichtung 50 ähnelt, bis auf die weiter unten beschriebenen Einzelheiten, bekannten Magnet-Streufluß-Meßeinrichtungen, d.h. die Prüfeinrichtung 50 weist einen Behälter auf, der eine Flüssigkeit mit magnetisierbaren Teilchen enthält. Bei Erzeugung eines Magnetfeldes mittels des Magneten 10 entsteht an möglichen Fehlstellen in einem Werkstück ein magnetisches Streufeld 28, welches die Flüssigkeit in dem Behälter durchsetzt, so daß sich die magnetischen Teilchen in einer für die Fehlstelle charakteristischen Struktur anordnen. Beim Stand der Technik wird diese charakteristische Struktur der magnetisierbaren Teilchen chemisch fixiert. Bei der Prüfeinrichtung 50 gemäß der Erfindung erfolgt eine derartige chemische Fixierung der magnetisierbaren Teilchen nicht, sondern es wird eine schnelle Beobachtung dieser Strukturen ermöglicht. Nach der Beobachtung und gegebenfalls der Registrierung der Struktur, wird sie wieder aufgelöst, so daß die Prüfeinrichtung 50 sofort auf eine andere Stelle des zu prüfenden Werkstückes (Z.B. Schweißnaht) aufgesetzt werden kann, um erneut eine schnelle Prüfung durchzuführen, wie nachfolgend näher beschrieben wird.

In Fig. 5 ist die elektrische Versorgung des Magneten 10 schematisch mit dem Bauteil 52 angedeutet. Die elektrische Versorgung entspricht dem vorstehend anhand der Fig. 1 bis 4 Beschriebenen.

Weiterhin weist die Prüfeinrichtung 50 optische Leiter 54, 54′ auf, die weiter unten noch näher beschrieben werden. Die Prüfvorrichtung 50 wird insgesamt mittels einer Stütze 56 in bezug auf die Pole N und S des Magneten 10 positioniert. Dabei ist die Prüfeinrichtung 50 so bewegbar, daß sie, beispielsweise in einer Anordung gemäß Fig. 2 mit ihrer Stirnfläche 58 genau über der Schweißnaht 22 in satter Anlage positionierbar ist.

Die Fig. 6 bis 8 zeigen Einzelheiten der Prüfvorrichtung 50, wobei der Magnet 10 und dessen Versorgung weggelassen sind.

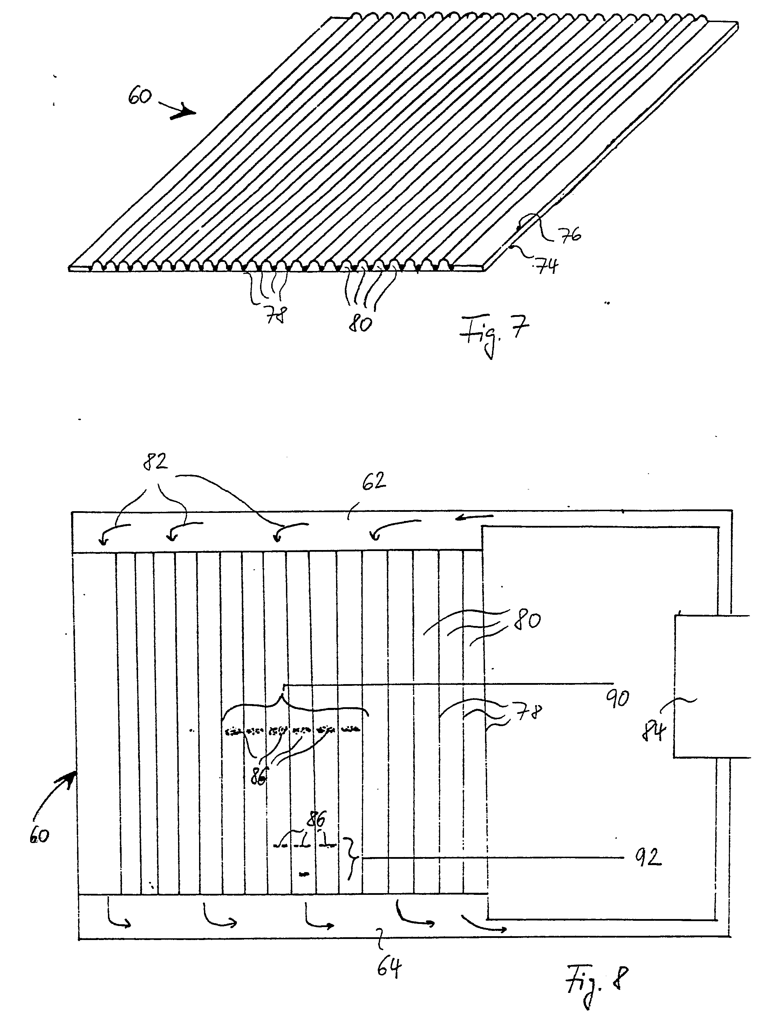

Die Prüfeinrichtung 50 weist an ihrer Stirnseite 58 (Fig. 5) einen Behälter 60 auf, der in den Fig. 7 und 8 näher beschrieben ist. Der Behälter 60 ist elastisch, so daß er paßgenau auf das zu untersuchende Werkstück auflegbar ist. Seitenteile 62, 64 des Behälters 60 sind an einem Rahmen 63 flüssigkeitsdicht befestigt. Etwa parallel zum Behälter 60 ist ebenfalls eine Rückwand 66 beidseitig flüssigkeitsdicht am Rahmen 66 befestigt, so daß der Behälter 60 und die Rückwand 66 eine Kammer 68 bilden, in der eine klare Flüssigkeit angeordnet ist. Die Rückwand 66 besteht aus durchsichtigem Material. Bei Arbeiten unter Wasser ist die Kammer 68 druckausgeglichen, was z.B. über ein Ausgleichsventil erreicht werden kann. Die Rückwand 66 ist elastisch eingespannt, d.h. innerhalb des Rahmens 63 in Richtung auf den Behälter 60 bewegbar. Dabei wird der Druck in der Kammer 68 erhöht.

Weiterhin weist die Prüfeinrichtung 50 gemäß Fig. 6 eine Leuchte 70 auf, mit der der Behälter 60 auf seiner dem Werkstück 20 in Fig. 6 angedeutet) abgekehrten Seite zu beleuchten ist. Mittels einer Optik 72 kann dann das Innere des Behälters 60 beobachtet werden und das von der Optik 72 erzeugte Bild wird ber einen Lichtleiter 54 vom Meßort weg übertragen, beispielsweise an Bord eines Schiffes, auf eine Förderplattform oder dergleichen. Die Leuchte 70 wird über Lichtleiter 54 versorgt.

Gemäß Fig. 7 weist der Behälter 60 eine flache Form aus und besteht aus zwei elastischen Folien 74, 76, von denen mindestens eine, nämlich die der Leuchte zugekehrte, durchsichtig ist. Die Folien 74, 76 sind entlang von Schweißnähten 78 verschweißt, so daß langgestreckte Kammern 80 entstehen, die zeilenweise angeordnet sind.

Fig. 8 zeigt eine schematische Draufsicht auf die Kammern 80 und zusätzlich die Seitenteile 62, 64 des Behälters 60. Eine Flüssigkeit 82 strömt in Richtung der Pfeile in einem Kreislauf durch die Seitenteile 62, 64, die Kammern 80 und eine Pumpe 84, welche den Kreislauf in Gang hält.

In der Flüssigkeit 82 sind in bekannter Weise magnetisierbare Teilchen 86 enthalten. Wird der Behälter 60 mit seiner elastischen Folie 76 (Fig. 7) auf das zu prüfende Werkstück 20 gelegt und mit dem Magneten ein Magnetfeld erzeugt, so bilden die magnetisierbaren Teilchen, wie oben beschrieben, an einer Fehlstelle aufgrund des dort entstehenden Streufeldes 28 (Fig. 2) eine charakteristische Struktur. Hierzu wird die Strömung der Flüssigkeit 82 durch die Kammern 80 entweder kurzzeitig unterbrochen oder so gering gehalten, daß die von den Teilchen 86 gebildete Struktur 90 (Fig. 8) nicht gestört wird.

In Fig. 8 sind zwei von magnetisierbaren Teilchen 86 erzeugte Strukturen 90, 92 gezeigt. Die Struktur 90 entspricht einer Fehlstelle (z.B. Fehlstelle 24 gemäß Fig. 2), während die Struktur 92 eine codierte Indikator-Struktur ist, d.h. die Struktur 92 gibt an, an welchem Ort des Werkstückes 20 gerade die Messung durchgeführt wird.

Die gemäß Fig. 8 erzeugte Struktur 90 (bzw. die Struktur 92) wird mittels der Leuchte 70 beleuchtet. Die magnetisierbaren Teilchen 86 sind so ausgebildet, daß sie aufgrund der Beleuchtung deutlich zu erkennen sind. Zum Beispiel können die magnetisierbaren Teilchen 86 reflektierend ausgebildet sind. Sie können aber auch selbst leuchten (fluoreszieren). Zur Erzeugung eines deutliche Strukturbildes sind die magnetisierbaren Teilchen 86 bevorzugt schuppenförmig gestaltet. Die Optik 72 (Fig. 6) bildet die leuchtende bzw. glänzende Struktur 90 der über der Fehlstelle geordneten magnetisierbaren Teilchen 86 auf den Lichtleiter 54 ab, welcher das Bild zu einem entfernt von der Prüfeinrichtung 50 angeordneten Meßplatz überträgt, wo in bekannter Weise ein Bild auf einem Bildschirm erzeugt und von einem Beobachter direkt untersucht werden kann. Dabei kann so fort festgestellt werden, ob das Werkstück an der untersuchten Stelle eine Fehlstelle aufweist oder nicht. Das Ergebnis kann dem Taucher sofort mitgeteilt werden. Das auf einem Bildschirm erzeugte Abbild der Strukturen 90 bzw. 92 kann aufgezeich-net werden.

## Ansprüche

1. Vorrichtung zum Prüfen von metallischen Werkstücken (20), insbesondere Schweißnähten (22), auf Fehlstellen (24), wie Risse, mit
- einem Behälter (60), der eine Flüssigkeit (82) mit magnetisierbaren Teilchen (86) enthält, und
- einer Einrichtung (10) zum Erzeugen eines Magnetfeldes, welches zumindest teilweise das Werkstück durchsetzt, so daß an möglichen Fehlstellen ein magnetisches Streufeld (28) entsteht, welches die Flüssigkeit (82) in dem Behälter durchsetzt und in dem sich die magnetisierbaren Teilchen in einer für die Fehlstelle charakteristischen Struktur (90) anordnen,
dadurch **gekennzeichnet,**
- daß die magnetisierbaren Teilchen (86) optisch reflektierend oder leuchtend ausgebildet sind, und
- daß eine Lichtquelle (70) zum Beleuchten der Teilchen vorgesehen ist, sowie
- eine Einrichtung (54, 72) zum Betrachten der charakteristischen Struktur (90) der Teilchen.

2. Vorrichtung nach Anspruch 1,
dadurch **gekennzeichnet,**
daß der Behälter (60) eine Vielzahl zeilenweise angeordneter Kammern (90) aufweist, durch welche die Flüssigkeit (82) strömt.

3. Vorrichtung nach einem der Ansprüche 1 oder 2,
dadurch **gekennzeichnet,**
daß die Einrichtung (10) zum Erzeugen eines Magnetfeldes so ausgelegt ist, daß ein magnetisches Wechselfeld mit einer Frequenz höher als 60 Hz, vorzugsweise höher als 100 Hz bis zu 2000 Hz erzeugbar ist.

4. Vorrichtung nach einem der vorhergehenden Ansprüche,
dadurch **gekennzeichnet,**
daß die Einrichtung (10) zum Erzeugen eines Magnetfeldes (26) flexibel ausgebildet ist, so daß die Stellung ihrer Pole (N, S) an die Gestalt des Werkstückes (20) anpaßbar ist.

5. Vorrichtung nach einem der vorhergehenden Ansprüche,

dadurch **gekennzeichnet,**
daß die Einrichtung (10) zum Erzeugen eines Magnetfeldes eine Meßeinrichtung (30) aufweist, mit welcher das bei einer Prüfung des Werkstückes herrschende Magnetfeld (26) oder ein entsprechender Parameter meßbar ist.

6. Vorrichtung nach Anspruch 5,
dadurch **gekennzeichnet,**
daß die Stärke des Magnetfeldes (26) auf einen Sollwert geregelt wird.

*Fig. 1*

Fig. 2

Fig. 3

Fig. 4

Fig. 5

Fig. 6

60

76

74

78    80

Fig. 7

82                    62

80

78        90

84

60

86

86

92

64

Fig. 8

## EINSCHLÄGIGE DOKUMENTE

EP 88114674.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | <u>DE - A1 - 3 150 303</u> (HOXAN CORP.) <br><br> * Zusammenfassung; Ansprüche; Seite 9, Zeile 13 - Seite 10, Zeile 30; Fig. 1-6 * <br><br>-- | 1,3,4 | G 01 N 27/84 <br> G 01 N 27/85 |
| D,A | <u>DE - A1 - 3 145 090</u> (KLAUS HENRICHS GMBH) <br><br> * Zusammenfassung; Ansprüche; Fig. 1-6 * <br><br>-- | 1,2 | |
| A | <u>DE - A1 - 3 026 540</u> (INSTITUT DR. FRIEDRICH FORSTER) <br><br> * Gesamt * <br><br>-- | 1 | |
| A | <u>DE - B2 - 2 725 816</u> (INSTITUT DR. FRIEDRICH FORSTER) <br><br> * Ansprüche; Spalte 4, Zeile 44 - Spalte 6, Zeile 17; Fig. 1-3 * <br><br>-- | 1,4 | |

**RECHERCHIERTE SACHGEBIETE (Int. Cl.4)**

G 01 N 27/00

| Kategorie | Kennzeichnung | Betrifft |
|---|---|---|
| A | <u>DE - A1 - 2 552 985</u> (FÖRSTER) <br><br> * Ansprüche; Seite 9, Zeilen 5-19; Fig. 1,2 * <br><br>-- | 1,6 |
| A | <u>GB - A - 1 602 643</u> (KINS DEVELOP-MENTS) <br><br> * Gesamt * <br><br>---- | 1 |

Der vorliegende Recherchenbericht wurde für alle Patentansprüche erstellt.

| Recherchenort | Abschlußdatum der Recherche | Prüfer |
|---|---|---|
| WIEN | 22-11-1988 | ERBER |